# EUROPEAN PATENT APPLICATION

(11) **EP 1 536 591 A1**
(43) Date of publication of application: **01.06.2005**
(21) Application number: 03792101.2
(22) Date of filing: 25.08.2003
(51) Int. Cl.: H04L 9/00

(54) **METHOD OF NEGOTIATING THE ENCRYPTION ALGORITHMS**

(30) Priority: 26.08.2002 CN 02128990
(71) Applicant: Huawei Technologies Co., Ltd., Guangdong, Shenzhen 518057 (CN)
(72) Inventor: ZHENG, Zhibin, c/o Huawei Service Centre Building, 518057 Shenzhen, Guangdong (CN)
(74) Representative: Hilleringmann, Jochen, Dipl.-Ing.
(86) International application number: PCT/CN2003/000719
(87) International publication number: WO 2004/019549

(57) **Abstract**

A method of realizing negotiation of the encryption algorithms, which relates to the field of mobile communication or data communication, includes the step of identifying negotiation the encryption algorithms of both sides, the communication of the both sides is started when the negotiation is passed. Said negotiation the step of identifying the encryption algorithm identifier of the security protocol. Said encryption algorithm identifier includes algorithm identifier indicating a selected encryption algorithm, **characterized in that** said identifying the encryption algorithm identifier include the step of identifying the country code. As adding the country code, the producers needn't special negotiation when their different equipments communicate with each other in security protocol, at one time standardization, and settle the matter of some countries having their own special security protocols.

## Description

### Field of the Invention

The present invention relates to mobile communication and data communication fields, particularly to a method of implementing secret communication in mobile communication and data communication through negotiating encryption algorithms.

### Background of the Invention

In the traditional mobile communication or data communication field, to implement unified scale and application of devices, usually relevant standards are specified to support interconnection and intercommunication among the devices around the world. Particularly to the information security field, usually several standard encryption algorithms are specified to implement secure interconnection and intercommunication among network devices of different operators and different countries; the standard algorithms shall be universal globally; the communication between subscribers is implemented through negotiating the standard algorithms.

For example, in the typical data communication security field, IPSec is used widely as the security mechanism for the interconnected networks around the world; encrypted communication can be implemented between different network devices through IPSec. To ensure successful encrypted communication between different devices, several standard encryption algorithms are defined in IPSec. During communication, the encryption algorithm used between the two parties is negotiated through Security Association (SA). Data Encryption Standard (DES), 3DES and Advanced Encryption Standard (AES) encryption algorithms are defined in IPSec as common standard encryption algorithms; Message Digest Algorithm 5 (MD5) and Secure Hash Algorithm (SHA-1) algorithms are used as common standard signature algorithms.

Similarly, in wireless 3G communication systems, the algorithms used for subscriber information encryption shall also be standard algorithms instead of non-standard encryption algorithms. Standard algorithms are negotiated through security protocols. For example, presently, Kasumi standard algorithm has been defined for 3G communications.

In some countries, due to the information security management policies, the standard encryption algorithms developed by other countries are forbidden to use indomestic communication systems; for example, all of the algorithms mentioned above are forbidden to use in the devices. To meet the demand for domestic application, some manufacturers have developed private encryption algorithms permitted in the country and the encryption algorithms substitute for standard algorithms in actual application. This will result in special algorithm identifiers in some devices. Therefore, it is difficult to implement interconnection and intercommunication between devices from different manufacturers because the devices are unable to negotiate effectively with each other. This has brought severe problem to applications. Often, the consequence is: the devices that are to be interconnected with each other have to be devices from the same manufacturer, ornegotiationbetweendevices is required. This is not suitable for the trend of application globalization of communication network devices.

In the communication field, the communication between different devices is implemented through protocol negotiation. Therefore, when secret communication between different devices is required, security parameters have to be negotiated between the devices. The security parameters may include security algorithm, key, start time of encryption, random number, etc. The security parameters for different system and for different requirements are not identical. Negotiation for encryption algorithm is necessary when the encryption algorithm is not fixed in some system.

As a result, the prior art can't meet the challenge in consideration of application globalization as well as demands of some countries for special security requirements.

### Summary of the Invention

An object of the present invention is to provide a solution for the problems in above special application cases, i.e., it implements global secret communication through adding a Country Mobile Identifier (CMI) in the Algorithm Identifier (AI) of the traditional SA.

A method of negotiating encryption algorithm, comprises a step of authenticating the encryption algorithm identifier in the security protocol, said encryption algorithm identifier containing an algorithm identifier identifying the chosen encryptionalgorithm, and also comprises a step of authenticating a CMI.

Said CMI is in the encryption algorithm identifier.

Said CMI, corresponding to different countries, constitutes a CMI set.

Said CMI is an identifier assigned by the International Organization for Standardization (ISO).

Said CMI may be a Global Mobile Identifier (GMI).

In said method of negotiating encryption algorithm, for a country or an operator that has no special requirement for the information security algorithm, the CMI is substituted with a global mobile identifier, and the algorithm identifier is the specified standard algorithm identifier.

In said method of negotiating encryption algorithm, for a country or an operator that has special requirements for the information security algorithm, the algorithm identifier is the standard algorithm permitted by the country or the operator.

Through adding a CMI, the devices fromdifferent manufacturers will no longer require negotiation between manufacturers the to implement secret intercommunication; in the meantime, through standardization, the demands of countries with special security requirements can be met.

### Detailed Description of the Embodiments

In the communication field, communication between different devices is implemented through protocol negotiation. Therefore, when secret communication between different devices is required, the security parameters between each other have to be negotiated and authenticated through a security protocol. After successful negotiation, the devices may communication with each other. The security parameters may include security algorithm, key, start time of encryption, and random number, etc. The security parameters for different system and for different requirements are not identical. Negotiation for encryption algorithm is necessary when the encryption algorithm is not fixed in some system.

In the traditional methodof negotiating encryption algorithm, the negotiation comprises a step of authenticating the encryption algorithm identifier in the security protocol; said encryption algorithm identifier contains an algorithm identifier identifying the chosen encryption algorithm. The method according to the present invention comprises a step of authenticating the encryption algorithm identifier, and the step of authenticating the encryption algorithm identifier also comprises a step of authenticating a CMI; said CMI is in the encryption algorithm identifier, as shown in table 1:

**table 1**

| | |
|---|---|
| CMI (Country Mobile Identifier) | AI (Algorithm Identifier) |

It can be seen that the encryption algorithm identifier according to the present invention comprises two parts: CMI and AI.

In the CMI, each country is assigned a fixed code, which may employ the identifier assigned by ISO; all of the CMIs constitute a CMI set.

In said CMI set, A GMI is also assigned.

Since the algorithm identifier corresponding to each country may be different, for a standard algorithm that is used globally, the determined GMI may be used as the CMI. Countries or operators that have no special requirement for the information security algorithm may prefer a standard algorithm; in this case, the CMI of the security algorithm is GMI; and the corresponding algorithm identifier usually indicates an available standard algorithm.

However, countries or operators that have special security requirements for the information encryption algorithm maybe do not expect to use standard algorithms; in this case, the CMI of the security algorithm is the CMI of the country; and the corresponding algorithm identifier usually indicates a standard algorithm permitted in the country.

Above algorithm identifier shall be standardized, so that standard and nonstandard entries may be included in a device from any manufacturer because the encryption algorithm identifier parameters in the security protocol include CMI and AI. When the intercommunicating devices employ standard entries, the CMIs in the security protocols of the two intercommunicating devices will be both GMI; when the intercommunicating devices employ nonstandard entries, the CMI in the security protocol of two intercommunicating devices will be the CMI of the corresponding country. This can overcome the problems in intercommunication between different devices when there are special security requirements.

It is assumed that device A in company A is to communicate with device B in company B through a secure communication connection. The secure communication connection has to be implemented with a security protocol command P; the security protocol comprises a security parameter - Security Algorithm Identifier (SAI), which is 12 bits in length, wherein the first 8 bits represent CMI, the rest 4 bits represent AI. Suppose "00000000" represents GMI, "0000"~"1111" represents algorithms 1~16, the CMI of the device is "00001111":
If the two devices will communicate with standard algorithm 3, the communication process is as follows:
   1. A sets the SAI as "000000000011" and sends the security protocol command P1 composed of a list comprising the parameter and other security parameters to B;
   2. B determines the standard algorithm that is supported by both devices through acknowledging the SAI received, chooses the standard algorithm 3 as the encryption algorithm, and returns an acknowledgement message;
   3. Device A and Device B encrypt/decrypt subsequent communication information with the standard algorithm to accomplish the secure communication between the two.
   4. In above case, if device A and device B support multiple standard algorithms, multiple SAIs will be contained in the security protocol during the negotiation process; however, the CMI part is "00000000".
If the two devices have to communicate with the non-standard algorithm 2 permitted by the country, the communication process is as follows:
   1. A sets the SAI as "000011110010" and sends the security protocol command P1 composed of the parameter and other security parameters to device B.
   2. B determines the non-standard algorithm that is supported by both devices through acknowledging the SAI received, chooses the non-standard algorithm 2 as the encryption algorithm, and returns an acknowledgement message.
   3. Device A and Device B encrypt/decrypt subsequent communication information with the non-standard algorithm 2 to accomplish the secure communication between the two.
   4. In above case, if device A and device B support multiple non-standard algorithms, multiple SAIs will be contained in the security protocol during the negotiation process; however, the CMI part is "00001111".

Through above processes, effective communication between different devices can be implemented in standard or special applications, and both standard and special security requirements are met.

It can be seen that the present invention can meet the demand of countries with standard security requirements as well as the demand of countries with special requirements in secure intercommunication between communication networks around the world, so that devices from different manufacturers will no longer require negotiation between the manufacturers for secure intercommunication; in addition, through standardization, the demand of countries with special security requirements can be met.

Though the present invention is described with above preferred embodiments, it is understood the protecting scope of the present invention is not limited by the embodiments. Those skilled in the art may implement modifications or replacements according to the disclosure of the present invention; however, any such modification or replacement shall fall into the protection scope of the present invention. Therefore, the protection scope is only defined by the claims.

## Claims

1. A method of negotiating encryption algorithm, comprising a step of authenticating the encryption algorithm identifier in the security protocol, said encryption algorithm identifier containing an algorithm identifier identifying the chosen encryption algorithm, wherein also comprises a step of authenticating a Country Mobile Identifier (CMI).

2. The method of negotiating encryption algorithm according to claim 1, wherein said CMI is in the encryption algorithm identifier.

3. The method of negotiating encryption algorithm according to claim 2, wherein said CMI, corresponding to different countries, constitutes a CMI set.

4. The method of negotiating encryption algorithm according to claim 3, wherein said CMI is an identifier assigned by the International Organization for Standardization (ISO).

5. The method of negotiating encryption algorithm according to claim 2 and 3, wherein said CMI may be a global mobile identifier.

6. The method of negotiating encryption algorithm according to claim 5, wherein for a country or an operator that has no special requirement for the information security algorithm, the CMI is substituted with a global mobile identifier, and the algorithm identifier is the specified standard algorithm identifier.

7. The method of negotiating encryption algorithm according to claim 5, wherein for a country or an operator that has special requirements for the information security algorithm, the algorithm identifier is the standard algorithm permitted by the country or the operator.
